# EUROPÄISCHE PATENTSCHRIFT

(11) **EP 1 791 711 B1**
(45) Veröffentlichungstag und Bekanntmachung des Hinweises auf die Patenterteilung: **14.09.2011**
(21) Anmeldenummer: 05771967.6
(22) Anmeldetag: 15.07.2005
(51) Int. Cl.: B60K 6/48

(54) **VERFAHREN ZUM BETREIBEN EINES FAHRZEUG-ANTRIEBS UND VORRICHTUNG ZUR DURCHFÜHRUNG DES VERFAHRENS**
METHOD FOR OPERATING A VEHICLE DRIVE AND DEVICE FOR CARRYING OUT SAID METHOD
PROCEDE POUR FAIRE FONCTIONNER UN ENTRAINEMENT DE VEHICULE ET DISPOSITIF POUR METTRE EN OEUVRE LE PROCEDE

(30) Priorität: 15.09.2004 DE 102004044507
(43) Veröffentlichungstag der Anmeldung: 06.06.2007
(73) Patentinhaber: ROBERT BOSCH GMBH, 70442 Stuttgart (DE)
(72) Erfinder: FALKENSTEIN, Jens-Werner, 73434 Aalen (DE); HUBER, Thomas, 74915 Daisbach (DE)
(86) Internationale Anmeldenummer: PCT/EP2005/053405
(87) Internationale Veröffentlichungsnummer: WO 2006/029922

(56) Entgegenhaltungen:
- EP-A- 1 302 353
- DE-A1- 10 314 396
- FR-A- 2 817 805
- US-A1- 2003 034 188
- US-B1- 6 301 529

## Beschreibung

### Stand der Technik

Die Erfindung geht aus von einem Verfahren zum Betreiben eines Fahrzeug-Antriebs und einer Vorrichtung zur Durchführung des Verfahrens nach den Oberbegriffen des Anspruchs 1 und des Anspruchs 13.

Zur Reduzierung von Emissionen und Kraftstoffverbrauch sind Hybridfahrzeuge bekannt. Deren Ziel ist, den Verbrennungsmotor im Bereich günstiger Wirkungsgrade zu betreiben, bei Stillstand des Fahrzeugs bzw. bei geringen Fahrzeuggeschwindigkeiten den Verbrennungsmotor abzuschalten und elektrisch angetrieben zu fahren sowie Bremsenergie durch Rekuperation zu nutzen. Bei Parallelhybriden erfolgt eine Addition der Drehmomente von Verbrennungsmotor und einer oder mehrerer Elektromaschinen. Die Elektromaschinen sind z.B. als Startergeneratoren mit dem Riementrieb oder mit der Kurbelwelle des Verbrennungsmotors verbunden.

Bei modernen Verbrennungsmotoren können verschiedene Betriebspunkte im Hinblick auf Abgasemissionen und Kraftstoffverbrauch problematisch sein. Beim Benzinmotor können z.B. hohe Drehmomente eine Abweichung vom stöchiometrischen Luft-Kraftstoffgemisch erfordern, ebenso kann eine Volllastanreicherung notwendig sein, um Bauteiltemperaturen in erlaubten Grenzen zu halten. Um sehr kleine Drehmomente einzustellen, ist eine Verschiebung des Zündwinkels in Richtung spät üblich, die auch eingesetzt wird, um einen Drehmomentvorhalt zu erzielen, um z.B. im Leerlauf einen schnellen Drehmomentaufbau zu ermöglichen. Mit der Zündwinkelverschiebung verschlechtert sich allerdings der Wirkungsgrad. In Verbindung mit Schubanschaltungen können erhöhte Stickoxidemissionen durch Sauerstoffüberschuss im Katalysator entstehen. Ebenso ist beim Betrieb eines Dieselmotors bei hohen Drehmomenten mit erhöhten Schwärzungszahlen und Stickoxidemissionen zu rechnen, bei geringen Drehmomenten besteht die Gefahr, dass der Katalysator auskühlt.

Aus der DE 101 60 480 A1 ist ein Verfahren und eine Vorrichtung zum Betreiben eines Fahrzeug-Antriebs bekannt, der unter anderem einen Verbrennungsmotor und eine Elektromaschine umfasst.

Aus der EP 1 302 353 A ist ein Verfahren und eine Vorrichtung, nach der Präambel der Ansprüche 1 und 13, zum Betrieben eines Hybridantriebs bekannt, wobei die Ausgangsleistung des Verbrennungsmotors in Abhängigkeit eines Ladezustand einer elektrischen Speichervorrichtung optimal eingestellt wird.

### Vorteile der Erfindung

Die Erfindung geht aus von einem Verfahren zum Betreiben eines Fahrzeug-Antriebs mit wenigstens einem Verbrennungsmotor und wenigstens einer mit dem wenigstens einen Verbrennungsmotor mechanisch gekoppelten Elektromaschine, sowie mit einem mit der Elektromaschine und/oder dem Verbrennungsmotor wirkverbundenen Energiespeicher.

Es wird vorgeschlagen, dass der wenigstens eine Verbrennungsmotor und die wenigstens eine Elektromaschine ein angefordertes Antriebs-Solldrehmoment im Wesentlichen gemeinsam erzeugen, wobei ein angefordertes optimales Solldrehmoment des Verbrennungsmotors auf ein optimiertes Minimalmoment oberhalb eines Verbrennungsmotor-Minimalmoments und/oder ein optimiertes Maximalmoment unterhalb eines Verbrennungsmotor-Maximalmoments begrenzt ist und eine Änderungsgeschwindigkeit des optimalen Solldrehmoments des Verbrennungsmotors begrenzt ist. Mit Hilfe einer oder mehrerer Elektromaschinen können ungünstige Drehmomente, d.h. sehr geringe oder sehr hohe Drehmomente und ebenso ungünstig hohe Änderungsgeschwindigkeiten des optimalen Solldrehmoments in eine positive wie in eine negative Richtung vermieden werden, was einen Kraftstoffverbrauch und eine Abgasemission des Verbrennungsmotors günstig beeinflusst. Der Verbrennungsmotor und die eine oder mehrere Elektromaschinen können hinsichtlich ihrer Drehmomente so koordiniert werden, dass das angeforderte gesamte Antriebs-Solldrehmoment wenigstens näherungsweise von Verbrennungsmotor und Elektromaschine gemeinsam mit hoher Dynamik erzeugt wird. Dabei ist von Vorteil, dass eine Motorsteuerung eines modernen Verbrennungsmotors ein momentanes Istdrehmoment auf der Basis von gemessenen oder abgeschätzten Größen ermitteln kann. Bei einem Benzinmotor mit Saugrohreinspritzung kann das Istdrehmoment z.B. aus Motordrehzahl, Saugrohrdruck, Zündzeitpunkt und Luftzahl gewonnen werden. Ebenso kann eine Steuerungs-/Regelungseinrichtung einer modernen Elektromaschine ein momentanes Istdrehmoment der Elektromaschine basierend auf ihren elektrischen Größen ermitteln. Das vorgeschlagene Verfahren kann daher günstig und ohne großen Aufwand auf leicht ermittelbare Größen zurückgreifen. Daneben können hohe Änderungsgeschwindigkeiten bzw. Gradienten der Drehmomente in positiver wie auch in negativer Richtung vorteilhaft vermieden werden, die im Hinblick auf Abgasemissionen und Kraftstoffverbrauch problematisch sind, z.B. bei der Lambda-Regelung von saugrohreinspritzenden Benzinmotoren in Verbindung mit ihrer Wandfilmproblematik oder im Zusammenhang mit dem "Turboloch" bei Dieselmotoren, bei dem ansonsten erhöhte Schwärzungszahlen auftreten könnten.

In einer vorteilhaften Ausgestaltung wird die wenigstens eine Elektromaschine entsprechend einer Differenz aus dem nichtbegrenzten Verbrennungsmotor-Solldrehmoment und einem Istdrehmoment des Verbrennungsmotors angesteuert. Damit können Begrenzungen des optimalen Verbrennungsmotor-Solldrehmoments, Begrenzungen für dessen Änderungsgeschwindigkeit und physikalisch bedingte Verzögerungen beim Drehmomentaufbau des Verbrennungsmotors von der oder den Elektromaschinen ganz oder teilweise kompensiert werden, was zu einer hohen Dynamik des Systems beiträgt. Ein Drehmomentvorhalt mittels Zündwinkelverschiebung ist nicht erforderlich. Werden erlaubte Betriebsbereiche der Elektromaschine oder des Energiespeichers, wie z.B. Drehmomentbereich oder Ladezustand, infolge der entsprechenden Ansteuerung verlassen, so können die Begrenzung für das optimale Verbrennungsmotor-Solldrehmoment und/oder die Begrenzung für dessen Änderungsgeschwindigkeit zurückgenommen werden.

In einer weiteren günstigen Ausgestaltung wird die Elektromaschine genutzt, um den Verbrennungsmotor in einem verbrauchsgünstigen und/oder emissionsgünstigen Drehmomentbereich zwischen dem optimierten Minimalmoment und dem optimierten Maximalmoment zu betreiben. Dieser Bereich bzw. das optimierte Minimalmoment und das optimierte Maximalmoment, hängt von der Motordrehzahl und weiteren Größen ab und liegt innerhalb der minimalen und maximalen Verbrennungsmotor-Drehmomentgrenzen des Verbrennungsmotors. Eine ungünstige Volllastanreicherung im Bereich zwischen dem optimierten Maximalmoment und dem maximalen Verbrennungsmotor-Drehmoment und/oder eine ungünstige Zündwinkelverstellung oder ein für die Abgasemission ungünstiger Übergang in eine Schubabschaltung im Bereich zwischen dem optimierten Minimalmoment und dem minimalen Verbrennungsmotor-Drehmoment kann durch die entsprechende Ansteuerung der Elektromaschine vermieden werden.

In einer vorteilhaften Weiterbildung werden das optimierte Minimalmoment und/oder das optimierte Maximalmoment und/oder die Änderungsgeschwindigkeit des optimalen Verbrennungsmotor-Solldrehmoments abhängig von Betriebsbedingungen des Verbrennungsmotor eingestellt. Alternativ oder zusätzlich kann das optimierte Minimalmoment und/oder das optimierte Maximalmoment und/oder die Änderungsgeschwindigkeit des optimalen Solldrehmoments abhängig von Betriebsbedingungen der Elektromaschine eingestellt werden. Alternativ oder zusätzlich kann das optimierte Minimalmoment und/oder das optimierte Maximalmoment und/oder die Änderungsgeschwindigkeit des optimalen Solldrehmoments auch abhängig von Betriebsbedingungen des Energiespeichers eingestellt werden. Alternativ oder zusätzlich kann das optimierte Minimalmoment und/oder das optimierte Maximalmoment und/oder die Änderungsgeschwindigkeit des optimalen Solldrehmoments abhängig von einem zeitlichen Verlauf von Solldrehmomenten eingestellt werden. Zweckmäßigerweise wird das Solldrehmoment aus einer Fahrpedalstellung und/oder einer Bremspedalstellung abgeleitet. Die maximal zulässige Änderungsgeschwindigkeit des optimalen Solldrehmoments kann aus einer Änderungsgeschwindigkeit der Fahrpedalstellung und/oder einer Bremspedalstellung abgeleitet werden.

Es ist günstig, wenn das Antriebs-Solldrehmoment abhängig von einem Leerlaufregler und/oder einer aktiven Schwingungsdämpfung und/oder einer Getriebesteuerung bestimmt wird, so dass wesentliche Einflussgrößen auf das Betriebsverhalten des Fahrzeugs berücksichtigt werden können. Weiterhin ist ein Eingriff einer Betriebsstrategie mit einem Lade-Solldrehmoment vorteilhaft, die eine Versorgung eines Bordnetzes und eines Energiespeichers, insbesondere einer Batterie, sicherstellt und durch gezieltes Laden bzw. Entladen einen Gesamtwirkungsgrad des Antriebsstrangs verbessert. Es kann z.B. bei geringen Leistungsanforderungen der Energiespeicher geladen werden, wodurch das Drehmoment am Verbrennungsmotor steigt und der Verbrennungsmotor in einen Betriebspunkt mit einem günstigen spezifischen Verbrauch gelangt.

Zweckmäßigerweise werden bei unzulässigen Betriebsbedingungen und/oder unzureichender Leistung des Energiespeichers und/oder der Elektromaschine der Drehmomentbereich und/oder die Drehmomentdynamik des Verbrennungsmotors erhöht. Vorteilhaft ist, wenn bei kurzzeitigen dynamischen Vorgängen, z.B. bei einem verzögerten Drehmomentaufbau der Elektromaschine, ein Eingriff in die Grenzen des Drehmomentbereichs und/oder der Drehmomentdynamik des Verbrennungsmotors unterbleibt.

Weiterhin geht die Erfindung aus von einer Vorrichtung zur Durchführung eines Verfahrens zur Drehmomentsteuerung eines Antriebs mit wenigstens einem Verbrennungsmotor und wenigstens einer mit dem wenigstens einen Verbrennungsmotor mechanisch gekoppelten Elektromaschine in einem Fahrzeug, sowie mit einem mit der Elektromaschine und/oder dem Verbrennungsmotor wirkverbundenen Energiespeicher.

Es wird vorgeschlagen, dass eine Begrenzungseinheit vorgesehen ist, um ein angefordertes optimales Solldrehmoment des Verbrennungsmotors auf ein optimiertes Minimalmoment oberhalb eines Verbrennungsmotor-Minimalmoments und ein optimiertes Maximalmoment unterhalb eines Verbrennungsmotor-Maximalmoments zu begrenzen und/oder eine Änderungsgeschwindigkeit des optimalen Solldrehmoments des Verbrennungsmotors zu begrenzen.

Vorzugsweise ist eine Einheit vorgesehen, um einen Eingriff bei unzulässigen Betriebsbedingungen und/oder unzulässiger Leistung des Energiespeichers und/oder der Elektromaschine in Grenzen des Drehmomentbereichs und/oder der Drehmomentdynamik des Verbrennungsmotors zu unterbinden.

### Zeichnung

Weitere Ausführungsformen, Aspekte und Vorteile der Erfindung ergeben sich auch unabhängig von ihrer Zusammenfassung in Ansprüchen, ohne Beschränkung der Allgemeinheit aus einem nachfolgend anhand von einer Zeichnung dargestellten Ausführungsbeispiel der Erfindung.

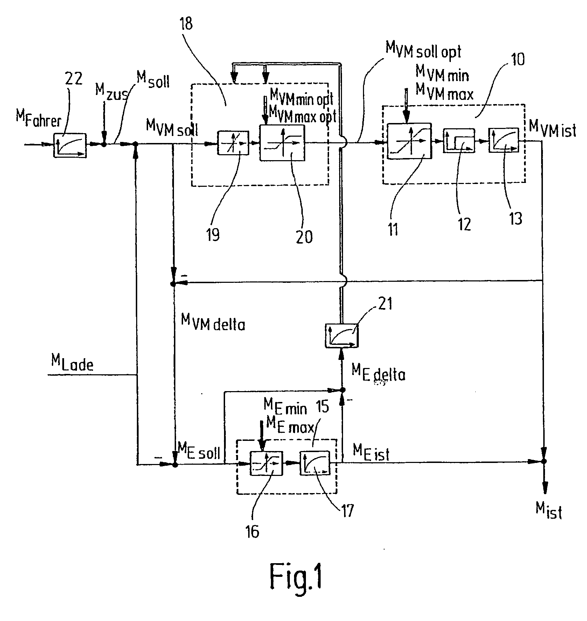

Im Folgenden illustriert die einzige Figur schematisch das erfindungsgemäße Verfahren.

### Beschreibung des Ausführungsbeispiels

Anhand der Figur wird das erfindungsgemäße Verfahren beispielhaft an einem Parallelhybrid-Kraftfahrzeug erläutert. Ein Antriebsstrang weist einen Verbrennungsmotor 10 mit einer nicht dargestellten Saugrohreinspritzung auf, der mit einem nicht dargestellten elektronischem Fahrpedal und einem nicht dargestellten Katalysator versehen ist. Ein Schwungrad des Verbrennungsmotors 10 ist mit einer als Kurbelwellenstartergenerator ausgebildeten Elektromaschine 15 gekoppelt. Von dem Verbrennungsmotor 10 und der Elektromaschine 15 erzeugte Drehmomente addieren sich zu einem AntriebsDrehmoment. Ein vom Fahrer über ein das Fahrpedal vorgegebene Solldrehmoment M_{Fahrer} wird mittels eines Vorfilters 22 tiefpassgefiltert, um eine Anregung von Triebstrangschwingungen durch den Fahrer zu vermeiden bzw. eine Lastschlagdämpfung zu erreichen. Hinter dem Vorfilter 22 erfolgt ein Eingriff eines nicht dargestellten Leerlaufreglers und optional einer aktiven Schwingungsdämpfung und/oder einer Getriebesteuerung mit einem zusätzlichen Solldrehmoment M_{zus}. Die Summe dieser Drehmomente ergibt das gesamte Antfiebs-Solldrehmoment M_{soll,} das einen Sollwert für ein Summendrehmoment Mᵢₛₜ von Verbrennungsmotor 10 und Elektromaschine 15 darstellt.

Daneben ist mit einem Lade-Solldrehmoment M_{Lade} ein Eingriff einer Betriebsstrategie vorgesehen, die eine Versorgung eines Bordnetzes und eines nicht dargestellten elektrischen Energiespeichers sicherstellt und durch gezieltes Laden bzw. Entladen des Energiespeichers einen Gesamtwirkungsgrad des Antriebsstrangs verbessert. So kann bei geringen Leistungsanforderungen, beispielsweise im Stadtverkehr, der Energiespeicher geladen werden, wodurch das Drehmoment am Verbrennungsmotor 10 steigt und der Verbrennungsmotor 10 typischerweise in einen Betriebspunkt mit günstigerem spezifischen Verbrauch gelangt.

Das Verhalten des Verbrennungsmotors 10 bei einer Drehmomentansteuerung ist von der Dynamik des Luftpfads abhängig und wird mit einer Reihenschaltung eines Totzeitglieds 12 und einem PT1-Verzögerungsglied 13 erster Ordnung näherungsweise beschrieben. Eine Begrenzereinheit 11 limitiert das vom Verbrennungsmotor 10 angeforderte optimale Solldrehmoment M_{VM Soll opt} auf ein Verbrennungsmotor-Maximalmoment M_{VM max} und ein Verbrennungsmotor-Minimalmoment M_{VM min} bei Schubabschaltung. Das Verbrennungsmotor-Maximalmoment M_{VM max} ist von verschiedenen Betriebsparametern wie Motordrehzahl, Ladedruck eines etwaigen Turboladers und dergleichen, abhängig.

Das Verhalten der Elektromaschine 15 bei einer Drehmomentansteuerung lässt sich ebenfalls näherungsweise mittels eines PT1-Verzögerungsglieds 17 erster Ordnung beschreiben. Aufgrund ihrer kleineren Zeitkonstante im Vergleich mit dem Verbrennungsmotor 10 weist die Elektromaschine 15 jedoch eine sehr viel höhere Dynamik bei einer Drehmomentsteuerung auf.

Eine Momentenaufbereitungseinheit 18 für den Verbrennungsmotor 10 enthält eine Gradientenbegrenzereinheit 19, die für eine limitierte Anstiegsgeschwindigkeit bzw. Änderungsgeschwindigkeit des optimalen Verbrennungsmotor-Solldrehmoments M_{VM soll opt} sorgt. Eine weitere Begrenzereinheit 20 limitiert auf einen optimalen Drehmomentbereich zwischen einem optimierten Minimalmoment M_{VM min opt} und einem optimierten Maximalmoment M_{VM max opt}. Dieser optimale Drehmomentbereich kennzeichnet dabei den günstigsten Betriebsbereich des Verbrennungsmotors 10, der von Betriebsparametern wie der Motordrehzahl, dem Ladedruck eines etwaigen Turboladers eines Turbomotors und dergleichen, abhängig ist.

Der optimale Drehmomentbereich liegt innerhalb der Drehmomentgrenzen M_{VM max} und M_{VM min} des Verbrennungsmotors 10. Das optimierte Maximalmoment M_{VM max opt} ist kleiner als das Verbrennungsmotor-Maximalmoment M_{VM max}. Im Bereich zwischen den beiden Maximalmomenten M_{VM max opt} und M_{VM max} würde im Ausführungsbeispiel eine ungünstige Volllastanreicherung des Verbrennungsmotors 10 erfolgen. Das optimierte Minimalmoment M_{VM min opt} ist größer als das Verbrennungsmotor-Minimalmoment M_{VM min}. Im Bereich dazwischen würde eine für einen Kraftstoffverbrauch ungünstige Verstellung des Zündwinkels in Richtung spät bzw. ein Übergang in eine für Abgasemissionen ungünstige Schubabschaltung erfolgen.

Das nicht dargestellte Steuergerät des Verbrennungsmotors 10 ermittelt das momentane Verbrennungsmotor-Istdrehmoment M_{VM ist}.

Das Differenzmoment M_{VM delta} aus dem nicht begrenzten Solldrehmoment M_{VM Soll} und dem Istdrehmoment M_{VM ist} des Verbrennungsmotors 10 wird der Elektromaschine 15 aufgeschaltet.

Im dynamischen Betrieb gleicht die Elektromaschine 15 den verzögerten Drehmomentaufbau bzw. Drehmomentabbau des Verbrennungsmotors 10 aus und sorgt für eine hohe Dynamik des Antriebssystems. Ein Drehmomentvorhalt mittels Zündwinkelverschiebung ist nicht erforderlich.

Daneben wird die Elektromaschine 15 genutzt, um den Verbrennungsmotor 10 im optimalen Drehmomentbereich zwischen M_{VM min opt} und M_{VM max opt} zu betreiben. Lassen z.B. der Ladezustand oder die Leistung des Energiespeichers dies nicht zu, so wird der Eingriff der Elektromaschine 15 durch Modifikation der Drehmomentgrenzen M_{E min} und M_{E max} der Elektromaschine 15 zurückgenommen. So oder bei einer Begrenzung aufgrund von physikalischen Eigenschaften der Elektromaschine 15 entsteht eine Abweichung M_{E delta} zwischen einem Solldrehmoment M_{E soll} und einem Istdrehmoment M_{E ist} der Elektromaschine 15.

Die Abweichung M_{E delta} wirkt auf die Begrenzereinheit 20 und/oder die Gradientenbegrenzereinheit 19. Steigt der Betrag der Abweichung M_{E delta} an, werden die Grenzen für das optimale Verbrennungsmotor-Solldrehmoment M_{VM soll opt} ausgeweitet und/oder es werden höhere Änderungsgeschwindigkeiten des optimalen Verbrennungsmotor-Solldrehmoments M_{VM soll opt} zugelassen. Der Verbrennungsmotor 10 kann dann den optimalen Drehmomentbereich verlassen.

Eine zwischengeschaltete Filtereinheit oder Logikeinheit 21 verhindern einen entsprechenden Eingriff auf die Begrenzereinheit 20 und/oder die Gradientenbegrenzereinheit 19 in der Momentenaufbereitungseinheit 18 bei kurzzeitigen, dynamischen Vorgängen, z.B. infolge einer Verzögerung beim Drehmomentaufbau der Elektromaschine 15.

Im Ausführungsbeispiel erfolgt eine Umsetzung des gesamten Antriebs-Solldrehmoments Mₛₒₗₗ in den Istwert Mᵢₛₜ, der das Summendrehmoment von Verbrennungsmotor 10 und Elektromaschine 15 darstellt, mit der hohen Dynamik der Elektromaschine 15. Dabei sind der Drehmomentbereich und die Drehmomentdynamik des Verbrennungsmotors 10 begrenzt, um Abgasemissionen und Kraftstoffverbrauch zu reduzieren. Lassen Eigenschaften der Elektromaschine 15 dies nicht zu, werden der Drehmomentbereich und/oder die Drehmomentdynamik des Verbrennungsmotors 10 erhöht.

## Patentansprüche

1. Verfahren zum Betreiben eines Fahrzeug-Antriebs, mit wenigstens einem Verbrennungsmotor (10) und wenigstens einer mit dem wenigstens einen Verbrennungsmotor (10) mechanisch gekoppelten Elektromaschine (15) sowie mit einem mit der Elektromaschine (15) und/oder dem Verbrennungsmotor (10) wirkverbundenen Energiespeicher,
wobei der wenigstens eine Verbrennungsmotor (10) und die wenigstens eine Elektromaschine (15) ein angefordertes Antriebs-Solldrehmoment (Mₛₒₗₗ) im Wesentlichen gemeinsam erzeugen, wobei ein angefordertes optimales Solldrehmoment (M_{VM soll opt}) des Verbrennungsmotors (10) auf ein optimiertes Minimalmoment (M_{VM min opt}) oberhalb eines Verbrennungsmotor-Minimalmoments (M_{VM min}) und/oder ein optimiertes Maximalmoment (M_{VM max opt}) unterhalb eines Verbrennungsmotor-Maximalmoments (M_{VM max}) begrenzt ist **dadurch gekennzeichnet, dass** eine Änderungsgeschwindigkeit des optimalen Solldrehmoments (M_{VM soll opt}) des Verbrennungsmotors (10) begrenzt ist.

2. Verfahren nach Anspruch 1, **dadurch gekennzeichnet, dass** die wenigstens eine Elektromaschine (15) entsprechend einer Differenz (M_{\/M delta}) aus dem nichtbegrenzten Solldrehmoment (M_{VM soll}) und einem Istdrehmoment (M_{VM ist}) des Verbrennungsmotors (10) angesteuert wird.

3. Verfahren nach Anspruch 1 oder 2, **dadurch gekennzeichnet, dass** die Elektromaschine (15) genutzt wird, um den Verbrennungsmotor (10) in einem verbrauchsgünstigen und/oder emissionsgünstigen Drehmomentbereich zwischen dem optimierten Minimalmoment (M_{VM min opt}) und dem optimierten Maximalmoment (M_{VM max opt}) zu betreiben.

4. Verfahren einem der vorhergehenden Ansprüche, **dadurch gekennzeichnet, dass** das optimierte Minimalmoment (M_{VM min opt}) und/oder das optimierte Maximalmoment (M_{VM max opt}) und/oder die optimierte Änderungsgeschwindigkeit des optimalen Solldrehmoments (M_{VM soll opt}) abhängig von Betriebsbedingungen des Verbrennungsmotors (10) eingestellt werden.

5. Verfahren nach einem der vorhergehenden Ansprüche, **dadurch gekennzeichnet, dass** das optimierte Minimalmoment (M_{VM min opt}) und/oder das optimierte Maximalmoment (M_{VM max opt}) und/oder die Änderungsgeschwindigkeit des optimalen Solldrehmoments (M_{VM soll opt}) abhängig von Betriebsbedingungen der Elektromaschine (15) eingestellt werden.

6. Verfahren nach einem der vorhergehenden Ansprüche, **dadurch gekennzeichnet, dass** das optimierte Minimalmoment (M_{VM min opt}) und/oder das optimierte Maximalmoment (M_{VM max opt}) und/oder die Änderungsgeschwindigkeit des optimalen Solldrehmoments (M_{VM Soll opt}) abhängig von Betriebsbedingungen des Energiespeichers eingestellt werden.

7. Verfahren nach einem der vorhergehenden Ansprüche, **dadurch gekennzeichnet, dass** das optimierte Minimalmoment (M_{VM min opt}) und/oder das optimierte Maximalmoment (M_{VM max opt}) und/oder die Änderungsgeschwindigkeit des optimalen Solldrehmoments (M_{VM Son opt}) abhängig von einem Verlauf von Solldrehmomenten (M_{VM soll}) eingestellt werden.

8. Verfahren nach einem der vorhergehenden Ansprüche, **dadurch gekennzeichnet, dass** das Solldrehmoment (M_{VM Soll}) aus einer Fahrpedalstellung und/oder einer Bremspedalstellung abgeleitet wird und/oder die Änderungsgeschwindigkeit des optimalen Solldrehmoments (M_{VM soll opt}) aus einer Änderungsgeschwindigkeit der Fahrpedalstellung und/oder einer Bremspedalstellung abgeleitet wird.

9. Verfahren nach einem der vorhergehenden Ansprüche, **dadurch gekennzeichnet, dass** das Solldrehmoment (M_{VM soll}) abhängig von einem Leerlaufregler und/oder einer aktiven Schwingungsdämpfung und/oder einer Getriebesteuerung bestimmt wird.

10. Verfahren nach einem der vorhergehenden Ansprüche, **dadurch gekennzeichnet, dass** zur Sicherstellung der Versorgung eines Bordnetzes und/oder des Energiespeichers ein Lade-Solldrehmoment (M Lade) berücksichtigt wird.

11. Verfahren nach einem der vorhergehenden Ansprüche, **dadurch gekennzeichnet, dass** bei unzulässigen Betriebsbedingungen und/oder unzulässiger Leistung des Energiespeichers und/oder der Elektromaschine (15) der Drehmomentbereich und/oder die Drehmomentdynamik des Verbrennungsmotors (10) erhöht wird.

12. Verfahren nach einem der vorhergehenden Ansprüche, **dadurch gekennzeichnet, dass** bei kurzzeitigen dynamischen Vorgängen ein Eingriff in Grenzen des Drehmomentbereichs und/oder der Drehmomentdynamik unterbleibt.

13. Vorrichtung zur Durchführung eines Verfahrens zur Drehmomentsteuerung eines Antriebs mit wenigstens einem Verbrennungsmotor (10) und wenigstens einer mit dem wenigstens einen Verbrennungsmotor (10) mechanisch gekoppelten Elektromaschine (15) in einem Fahrzeug, sowie mit einem mit der Elektromaschine (15) und/oder dem Verbrennungsmotor (10) wirkverbundenen Energiespeicher,
wobei eine Begrenzungseinheit (18, 19) vorgesehen ist, um ein angefordertes optimales Solldrehmoment (M_{VM soll opt}) des Verbrennungsmotors (10) auf ein optimiertes Minimalmoment (M_{VM min opt}) oberhalb eines Verbrennungsmotor-Minimalmoments (M_{VM min}) und/oder ein optimiertes Maximalmoment (M_{VM max opt}) unterhalb eines Verbrennungsmotor-Maximalmoments (M_{VM max}) zu begrenzen
**dadurch gekennzeichnet, dass** die Begrenzungseinheit (18, 19) vorgesehen ist, um eine Änderungsgeschwindigkeit des optimalen Solldrehmoments (M_{VM soll opt}) des Verbrennungsmotors (10) zu begrenzen.

14. Vorrichtung nach Anspruch 13, **dadurch gekennzeichnet, dass** eine Einheit (21) vorgesehen ist, um einen Eingriff bei unzulässigen Betriebsbedingungen und/oder unzulässiger Leistung des Energiespeichers und/oder der Elektromaschine (15) in Grenzen des Drehmomentbereichs und/oder der Drehmomentdynamik des Verbrennungsmotors (10) zu unterbinden.

## Claims

1. Method for operating a vehicle drive having at least one internal combustion engine (10) and at least one electrical machine (15) which is mechanically coupled to the at least one internal combustion engine (10) and also having an energy storage means which is operatively connected to the electrical machine (15) and/or to the internal combustion engine (10), with the at least one internal combustion engine (10) and the at least one electrical machine (15) substantially together generating a required setpoint drive torque (Mₛₑₜ), with a required optimum setpoint torque (M_{VM set opt}) of the internal combustion engine (10) being limited to an optimized minimum torque (M_{VM min opt}) above a minimum torque (M_{VM min}) of the internal combustion engine and/or an optimized maximum torque (M_{VM max opt}) below a maximum torque (M_{VM max}) of the internal combustion engine, **characterized in that** a rate of change of the optimum setpoint torque (M_{VM} set ₒₚₜ) of the internal combustion engine (10) is limited.

2. Method according to Claim 1, **characterized in that** the at least one electrical machine (15) is driven in accordance with a difference (M_{VM delta}) between the unlimited setpoint torque (M_{VM set}) and an actual torque (M_{VM act}) of the internal combustion engine (10).

3. Method according to Claim 1 or 2, **characterized in that** the electrical machine (15) is used to operate the internal combustion engine (10) in a torque range, which is advantageous in respect of consumption and/or emissions, between the optimized minimum torque (M_{VM min opt}) and the optimized maximum torque (M_{VM max opt}).

4. Method according to one of the preceding claims, **characterized in that** the optimized minimum torque (M_{VM min opt}) and/or the optimized maximum torque (M_{VM max opt}) and/or the optimized rate of change of the optimum setpoint torque (M_{VM set opt}) are/is set as a function of operating conditions of the internal combustion engine (10).

5. Method according to one of the preceding claims, **characterized in that** the optimized minimum torque (M_{VM min opt}) and/or the optimized maximum torque (M_{VM max opt}) and/or the rate of change of the optimum setpoint torque (M_{VM set opt}) are/is set as a function of operating conditions of the electrical machine (15).

6. Method according to one of the preceding claims, **characterized in that** the optimized minimum torque (M_{VM min opt}) and/or the optimized maximum torque (M_{VM max opt}) and/or the rate of change of the optimum setpoint torque (M_{VM set opt}) are/is set as a function of operating conditions of the energy storage means.

7. Method according to one of the preceding claims, **characterized in that** the optimized minimum torque (M_{VM min opt}) and/or the optimized maximum torque (M_{VM max opt}) and/or the rate of change of the optimum setpoint torque (M_{VM set opt}) are/is set as a function of a profile of setpoint torques (M_{VM set}).

8. Method according to one of the preceding claims, **characterized in that** the setpoint torque (M_{VM set}) is derived from an accelerator pedal position and/or a brake pedal position, and/or the rate of change of the optimum setpoint torque (M_{VM set opt}) is derived from a rate of change of the accelerator pedal position and/or a brake pedal position.

9. Method according to one of the preceding claims, **characterized in that** the setpoint torque (M_{VM} set) is determined as a function of an idling controller and/or an active vibration damping system and/or a transmission control system.

10. Method according to one of the preceding claims, **characterized in that** a setpoint charging torque (M_{charge}) is taken into consideration in order to ensure the supply of power to an on-board electrical system and/or the energy storage means.

11. Method according to one of the preceding claims, **characterized in that** the torque range and/or the torque dynamics of the internal combustion engine (10) are/is increased in the event of impermissible operating conditions and/or impermissible power of the energy storage means and/or the electrical machine (15).

12. Method according to one of the preceding claims, **characterized in that** no intervention is made in limits of the torque range and/or the torque dynamics in the case of brief dynamic processes.

13. Apparatus for carrying out a method for torque control of a drive having at least one internal combustion engine (10) and at least one electrical machine (15) which is mechanically coupled to the at least one internal combustion engine (10) in a vehicle, and also having an energy storage means which is operatively connected to the electrical machine (15) and/or to the internal combustion engine (10), with a limiting unit (18, 19) being provided in order to limit a required optimum setpoint torque (M_{VM set opt}) of the internal combustion engine (10) to an optimized minimum torque (M_{VM min opt}) above a minimum torque (M_{VM min}) of the internal combustion engine and/or an optimized maximum torque (M_{VM max opt}) below a maximum torque (M_{VM max}) of the internal combustion engine, **characterized in that** the limiting unit (18, 19) is provided in order to limit a rate of change of the optimum setpoint torque (M_{VM set opt}) of the internal combustion engine (10).

14. Apparatus according to Claim 13, **characterized in that** a unit (21) is provided in order to suppress intervention in limits of the torque range and/or the torque dynamics of the internal combustion engine (10) in the event of impermissible operating conditions and/or impermissible power of the energy storage means and/or the electrical machine (15).

## Revendications

1. Procédé pour faire fonctionner un entraînement de véhicule, comprenant au moins un moteur à combustion interne (10) et au moins un moteur électrique (15) accouplé mécaniquement à l'au moins un moteur à combustion interne (10), ainsi qu'un accumulateur d'énergie relié fonctionnellement au moteur électrique (15) et/ou au moteur à combustion interne (10), l'au moins un moteur à combustion interne (10) et l'au moins un moteur électrique (15) produisant un couple de consigne d'entraînement demandé (Mₛₒₗₗ) essentiellement en commun, un couple de consigne optimal demandé (M_{VM soll opt}) du moteur à combustion interne (10) étant limité à un couple minimal optimisé (M_{VM min opt}) au-dessus d'un couple minimal du moteur à combustion interne (M_{VM min}) et/ou un couple maximal optimisé (M_{VM max opt}) étant limité en dessous d'un couple maximal du moteur à combustion interne (M_{VM max}),
**caractérisé en ce qu'**une vitesse de variation du couple de consigne optimal (M_{VM soll opt}) du moteur à combustion interne (10) est limitée.

2. Procédé selon la revendication 1, **caractérisé en ce que** l'au moins un moteur électrique (15) est commandé en fonction d'une différence (M_{VM delta}) entre le couple de consigne non limité (M_{VM soll}) et un couple instantané (M_{VM ist}) du moteur à combustion interne (10).

3. Procédé selon la revendication 1 ou 2, **caractérisé en ce que** le moteur électrique (15) est utilisé pour faire fonctionner le moteur à combustion interne (10) dans une plage de couple favorable pour la consommation et/ou pour les émissions, entre le couple minimal optimisé (M_{VM min opt}) et le couple maximal optimisé (M_{VM max opt}).

4. Procédé selon l'une quelconque des revendications précédentes, **caractérisé en ce que** le couple minimal optimisé (M_{VM min opt}) et/ou le couple maximal optimisé (M_{VM max opt}) et/ou la vitesse de variation optimisée du couple de consigne optimal (M_{VM soll opt}) sont ajustés en fonction de conditions de fonctionnement du moteur à combustion interne (10).

5. Procédé selon l'une quelconque des revendications précédentes, **caractérisé en ce que** le couple minimal optimisé (M_{VM min opt}) et/ou le couple maximal optimisé (M_{VM max opt}) et/ou la vitesse de variation du couple de consigne optimal (M_{VM soll opt}) sont ajustés en fonction de conditions de fonctionnement du moteur électrique (15).

6. Procédé selon l'une quelconque des revendications précédentes, **caractérisé en ce que** le couple minimal optimisé (M_{VM min opt}) et/ou le couple maximal optimisé (M_{VM max opt}) et/ou la vitesse de variation du couple de consigne optimal (M_{VM soll opt}) sont ajustés en fonction de conditions de fonctionnement de l'accumulateur d'énergie.

7. Procédé selon l'une quelconque des revendications précédentes, **caractérisé en ce que** le couple minimal optimisé (M_{VM min opt}) et/ou le couple maximal optimisé (M_{VM max opt}) et/ou la vitesse de variation du couple de consigne optimal (M_{VM soll opt}) sont ajustés en fonction d'une allure du couple de consigne (M_{VM soll}).

8. Procédé selon l'une quelconque des revendications précédentes, **caractérisé en ce que** le couple de consigne (M_{VM soll}) est dérivé d'une position de la pédale d'accélération et/ou d'une position de la pédale de frein, et/ou la vitesse de variation du couple de consigne optimal (M_{VM soll opt}) est dérivée d'une vitesse de variation de la position de la pédale d'accélération et/ou d'une position de la pédale de frein.

9. Procédé selon l'une quelconque des revendications précédentes, **caractérisé en ce que** le couple de consigne (M_{VM soll}) est déterminé en fonction d'un régulateur de marche à vide et/ou d'un amortissement d'oscillations actif et/ou d'une commande de boîte de vitesse.

10. Procédé selon l'une quelconque des revendications précédentes, **caractérisé en ce que** pour garantir l'alimentation d'un réseau de bord et/ou de l'accumulateur d'énergie, on tient compte d'un couple de consigne de charge (M_{Lade}).

11. Procédé selon l'une quelconque des revendications précédentes, **caractérisé en ce que** dans le cas de conditions de fonctionnement inadmissibles et/ou d'une puissance inadmissible de l'accumulateur d'énergie et/ou du moteur électrique (15), la plage de couple et/ou la dynamique de couple du moteur à combustion interne (10) est/sont augmentée(s).

12. Procédé selon l'une quelconque des revendications précédentes, **caractérisé en ce que** dans le cas d'opérations dynamiques de courte durée, une intervention dans les limites de la plage de couple et/ou de la dynamique de couple n'a pas lieu.

13. Dispositif pour mettre en oeuvre un procédé pour la commande de couple d'un entraînement comprenant au moins un moteur à combustion interne (10) et au moins un moteur électrique (15) accouplé mécaniquement à l'au moins un moteur à combustion interne (10) dans un véhicule, ainsi qu'un accumulateur d'énergie relié fonctionnellement au moteur électrique (15) et/ou au moteur à combustion interne (10),
une unité de limitation (18, 19) étant prévue, afin de limiter un couple de consigne optimal demandé (M_{VM soll opt}) du moteur à combustion interne (10) à un couple minimal optimisé (M_{VM min opt}) au-dessus d'un couple minimal du moteur à combustion interne (M_{VM min}) et/ou à un couple maximal optimisé (M_{VM max opt}) en dessous d'un couple maximal du moteur à combustion interne (M_{VM max}),
**caractérisé en ce que** l'unité de limitation (18, 19) est prévue pour limiter une vitesse de variation du couple de consigne optimal (M_{VM soll opt}) du moteur à combustion interne (10).

14. Dispositif selon la revendication 13, **caractérisé en ce qu'**une unité (21) est prévue pour supprimer une intervention en cas de conditions de fonctionnement inadmissibles et/ou d'une puissance inadmissible de l'accumulateur d'énergie et/ou du moteur électrique (15), dans les limites de la plage de couple et/ou de la dynamique de couple du moteur à combustion interne (10).
